# EUROPÄISCHE PATENTSCHRIFT

(11) **EP 3 307 586 B1**
(45) Veröffentlichungstag und Bekanntmachung des Hinweises auf die Patenterteilung: **17.04.2019**
(21) Anmeldenummer: 16728347.2
(22) Anmeldetag: 13.06.2016
(51) Int. Cl.: B60N 2/80, B60N 2/809, B60N 2/818, B60N 2/897

(54) **FÜHRUNGSHÜLSE FÜR EINEN FAHRZEUGSITZ**
GUIDE SLEEVE FOR A VEHICLE SEAT
DOUILLE DE GUIDAGE DESTINÉE À UN SIÈGE DE VÉHICULE

(30) Priorität: 11.06.2015 DE 102015210713
(43) Veröffentlichungstag der Anmeldung: 18.04.2018
(73) Patentinhaber: Adient Luxembourg Holding S.à r.l., 1855 Luxembourg (LU)
(72) Erfinder: WEHLING, Karsten, 51399 Burscheid (DE)
(74) Vertreter: Loock, Jan Pieter
(86) Internationale Anmeldenummer: PCT/EP2016/063488
(87) Internationale Veröffentlichungsnummer: WO 2016/198692

(56) Entgegenhaltungen:
- DE-A1-102010 031 048
- KR-B1- 101 473 749
- US-A1- 2012 200 135

## Beschreibung

Die Erfindung betrifft eine Führungshülse zur Aufnahme einer Stange einer Kopfstütze. Ferner betrifft die Erfindung einen Fahrzeugsitz für ein Kraftfahrzeug mit einer Rückenlehne und mit einer Kopfstütze.

### Stand der Technik

In der EP 1 609 665 B1 ist eine Führungshülse beschrieben, welche zur Befestigung einer Kopfstütze an der Rückenlehne eines Fahrzeugsitzes verwendet wird. Die Führungshülse wird in eine Öffnung in der Rückenlehne eines Fahrzeugsitzes eingelassen und dient der Aufnahme der Stange der Kopfstütze. Zur Höheneinstellung der Kopfstütze kann die Stange in der Führungshülse bewegt und ggf. in einer vorgegebenen Raststellung verriegelt werden.

Derartige Führungshülsen haben sich im Einsatz durchaus bewährt. Allerdings hat es sich als nachteilig herausgestellt, dass sich die Stange der Kopfstütze auch in der verriegelten Stellung gegenüber der Führungshülse geringfügig bewegen kann. Daher kann es durch Vibrationen des Fahrzeugs bzw. des Fahrzeugsitzes zu unerwünschten Klappergeräuschen kommen. Zur Verringerung von Klappergeräuschen sind bei der aus der EP 1 609 665 B1 bekannten Führungshülse zwei elastische Bereiche vorgesehen, welche von außen durch ein drahtförmiges Federelement mit einer Federkraft beaufschlagt werden.

Weitere Führungshülsen mit einem Hülsenkörper sind aus der der DE 196 08 851 C2, der DE 297 07 562 U1 und der DE 179 17 942 A1 bekannt. Die Hülsenkörper dieser Führungshülsen weisen jeweils zwei sich diametral gegenüberliegende elastische Bereiche auf. Die elastischen Bereiche werden jeweils durch ein Federelement mit einer Federkraft beaufschlagt.

Die DE 10 2010 031 048 A1 offenbart eine Sitzanordnung mit einer Trägerstütze, die zur Anordnung an einer Sitzlehne eingerichtet ist, sowie eine Führungshülse.

Die DE 199 45 585 B4 offenbart eine Führungshülse mit einem Hülsenkörper, der eine Stangenaufnahme aufweist. An dem Hülsenkörper sind zwei als Zungen ausgebildete elastische Bereiche vorgesehen, welcher in Richtung der Stangenaufnahme kraftbeaufschlagt sind um die Stange in der Stangenaufnahme festzulegen. An der Außenkontur des Hülsenkörpers ist eine den Hülsenkörper vollständig umgreifende Formfeder angeordnet, über welche die elastischen Bereiche mit einer Federkraft beaufschlagt werden.

### Offenbarung der Erfindung

Aufgabe der Erfindung ist es, eine Führungshülse mit einem Federelement anzugeben, welches einen kompakteren Aufbau aufweist.

Die Aufgabe wird gelöst durch eine Führungshülse gemäß Anspruch 1.

Das als Klammer ausgebildete Federelement umgreift den Hülsenkörper zumindest teilweise, so dass es möglich ist, das Federelement über mehrere in Umfangsrichtung des Hülsenkörpers angeordnete Befestigungspunkte an dem Hülsenkörper festzulegen. Die Breite des Federelements in axialer Richtung des Hülsenkörpers kann daher gegenüber einem drahtförmigen Federelement reduziert werden. Der Kontaktbereich des Federelements erstreckt sich insbesondere über die gesamte Breite des Federelements, so dass ein möglichst großer Kontaktbereich bereitgestellt wird, über welchen der elastische Bereich des Hülsenkörpers mit der Federkraft beaufschlagt werden kann.

Gemäß einer bevorzugten Ausgestaltung ist über das Federelement genau ein elastischer Bereich des Hülsenkörpers beaufschlagt. Je Federelement muss nur ein elastischer Bereich gefertigt werden, so dass sich ein gegenüber dem Stand der Technik reduzierter Herstellungsaufwand ergibt. Der Hülsenkörper kann genau einen elastischen Bereich und genau ein Federelement aufweisen. Alternativ ist es möglich, dass der Hülsenkörper mehrere elastische Bereiche und mehrere Federelemente aufweist, wobei die Anzahl der elastischen Bereiche und die Anzahl der Federelemente identisch ist.

Bevorzugt umgreift das als Klammer ausgebildete Federelement den Hülsenkörper nur teilweise. Besonders bevorzugt erstreckt sich die Klammer in Umfangsrichtung des Hülsenkörpers in einem Bereich von 40% bis 60%, besonders bevorzugt von 45% bis 55%, des Umfangs des Hülsenkörpers.

Gemäß einer vorteilhaften Ausgestaltung ist der Kontaktbereich des Federelements durch eine Ausstülpung des Materials des Federelements gebildet. Die Ausstülpung ist bevorzugt als ein in Richtung des Hülsenkörpers gebogener Bereich des Federelements ausgestaltet. Gemäß alternativer Ausführungsformen ist es erfindungsgemäß insbesondere vorgesehen, dass die Ausstülpung als ein in Richtung des Hülsenkörpers geprägter bzw. in einer anderen Art und Weise umgeformter Bereich des Federelements ausgestaltet ist.

Eine vorteilhafte Ausgestaltung sieht vor, dass das Federelement aus einem bandförmigen Grundkörper gebildet ist, wobei der Kontaktbereich als eine Ausstülpung zwischen zwei ersten, sich über die gesamte Breite des Grundkörpers erstreckenden Biegestellen ausgebildet ist. Eine derartige Ausgestaltung ermöglicht eine vereinfachte Fertigung des Kontaktbereichs durch Biegen des bandförmigen Grundkörpers ohne dass es erforderlich ist, Ausnehmungen in dem Grundkörper zur erzeugen. Die Biegestellen verlaufen bevorzugt in axialer Richtung des Hülsenkörpers. Bevorzugt weist das Federelement in einen W-förmigen Querschnitt auf.

Vorteilhaft ist es ferner, wenn das Federelement aus einem bandförmigen Grundkörper gebildet ist und zwei zweite Biegestellen aufweist, über welche die beiden Endbereiche des Grundkörpers in Richtung des Hülsenkörpers gebogen sind. Durch das Biegen der Endbereichs kann eine Vorspannung des Federelements derart ermöglicht werden, dass das Federelement an zwei gegenüberliegenden Seiten des Hülsenkörpers anliegt.

Erfindungsgemäß weist das Federelement zwei Befestigungsausnehmungen auf, über welche das Federelement an dem Hülsenkörper festlegbar ist. Die Befestigungsausnehmungen sind bevorzugt in den Endbereichen des bandförmigen Grundkörpers des Federelements angeordnet. Besonders bevorzugt sind die Befestigungsausnehmungen an Befestigungspunkten des Hülsenkörpers festgelegt, die in Umfangsrichtung des Hülsenkörpers voneinander beabstandet sind. Die Befestigungspunkte des Hülsenkörpers sind bevorzugt diametral gegenüberliegend an dem Hülsenkörper angeordnet.

Bevorzugt weist das Federelement außer den zwei Befestigungsausnehmungen keine weiteren Ausnehmungen auf, so dass keine weiteren Ausstanzungen erforderlich sind.

Der elastische Bereich ist bevorzugt einstückig an dem Hülsenkörper vorgesehen. Alternativ kann der elastische Bereich als Einsatz ausgebildet sein, der mit dem Hülsenkörper verbunden ist oder in die Stangenaufnahme des Hülsenkörpers eingebracht ist.

Das Federelement ist bevorzugt aus einem Metall, insbesondere einem elastischen Metall, ausgebildet. Das Federelement kann beispielsweise aus Federstahl ausgebildet sein. Besonders bevorzugt ist der Hülsenkörper aus einem Material mit hoher Schlagzähigkeit ausgebildet, wodurch die Robustheit der Führungshülse gegenüber unfallbedingter Stoßeinwirkung erhöht wird. Als vorteilhaft hat es sich herausgestellt, wenn der Hülsenkörper aus einem Polyamid, z .B. Nylon oder Perlon, ausgebildet ist. Besonders vorteilhaft ist es, wenn der Hülsenkörper aus einem schlagzäh modifizierten Polyamid, wie beispielsweise schlagzäh modifizierten Nylon oder schlagzäh modifizierten Perlon, ausgebildet ist. Alternativ kann der Hülsenkörper aus, insbesondere schlagzäh modifiziertem, Polyoxymethylen (POM) ausgebildet sein.

Vorteilhaft ist es, wenn die Führungshülse ein Verriegelungselement zur Verriegelung der Stange gegenüber der Führungshülse in einer vorgegebenen Verriegelungsstellung aufweist, so dass die Kopfstütze in einer vorgegebenen Position gegenüber der Rückenlehne festgelegt werden kann.

Gemäß einer vorteilhaften Ausgestaltung weist der elastische Bereich ein nach außen vorstehendes Element auf. Bevorzugt steht der Kontaktbereich des Federelements ausschließlich in Kontakt mit dem nach außen vorstehenden Element des elastischen Bereichs.

Gemäß einer vorteilhaften Ausgestaltung weist der elastische Bereich an der Seite des elastischen Bereichs, welche der Stangenaufnahme zugewandt ist, ein nach innen vorstehendes Element auf. Bevorzugt ist das nach innen vorstehende Element in axialer Richtung des Hülsenkörpers auf derselben Höhe angeordnet wie das nach außen vorstehende Element.

Die Aufgabe wird ferner gelöst durch einen Fahrzeugsitz für ein Kraftfahrzeug mit einer Rückenlehne und mit einer Kopfstütze, wobei zur Befestigung der Kopfstütze an der Rückenlehne eine vorstehend beschriebene Führungshülse an der Rückenlehne angeordnet ist.

Die im Zusammenhang mit der Führungshülse beschriebenen vorteilhaften Merkmale können allein oder in Kombination auch bei dem Fahrzeugsitz Verwendung finden.

Weitere Einzelheiten und Vorteile der Erfindung werden nachfolgend anhand des in den Figuren dargestellten Ausführungsbeispiels beschrieben. Hierin zeigt:
- Fig. 1: einen Teil eines Fahrzeugsitzes in einer perspektivischen Darstellung;
- Fig. 2: eine Führungshülse gemäß einem ersten Ausführungsbeispiel in einer Seitenansicht;
- Fig. 3: eine Detailansicht der Führungshülse nach Fig. 2;
- Fig. 4: die Führungshülse gemäß Fig. 2 in einer Schnittdarstellung gemäß der Schnittlinie A-A in Fig. 2;
- Fig. 5: ein Federelement in einer perspektivischen Darstellung; und
- Fig. 6: verschiedene Ansichten und Schnittdarstellungen des Federelements nach Fig. 5;
- Fig. 7: eine Führungshülse gemäß einem zweiten Ausführungsbeispiel in einer Seitenansicht;
- Fig. 8: die Führungshülse gemäß Fig. 7 in einer Schnittdarstellung im Bereich des oberen Federelements.

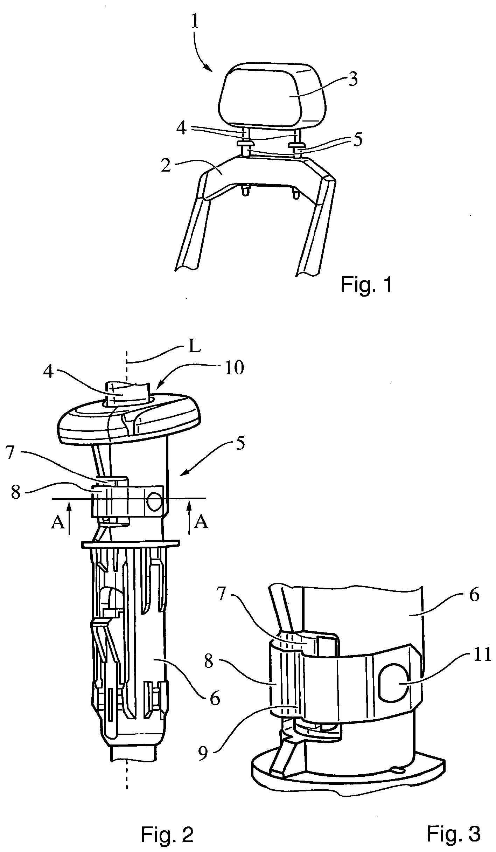

In der **Fig. 1** ist ein Fahrzeugsitz 1 für ein Kraftfahrzeug dargestellt, welcher als Vordersitz oder als Rücksitz ausgebildet sein kann. Der Fahrzeugsitz 1 weist eine Rückenlehne 2 auf, von welcher in der Fig. 1 lediglich ein Rahmen dargestellt ist. Oberhalb der Rückenlehne 2 ist eine Kopfstütze 3 angeordnet, welche zwei parallel verlaufende Stangen 5 aufweist, die in an der Oberseite der Rückenlehen 2 vorgesehene Öffnungen eingebracht sind.

In den Öffnungen der Rückenlehne 2 ist jeweils eine Führungshülse 5 angeordnet, über welche die Stangen 4 an der Rückenlehne 2 des Fahrzeugsitzes 1 festgelegt werden können.

Wie der Darstellung in **Fig. 2** entnommen werden kann, hat die Führungshülse 5 einen im Wesentlichen länglichen Aufbau. Die Führungshülse 5 weist einen einstückig ausgebildeten Hülsenkörper 6 auf, der sich entlang einer Längsachse L erstreckt. In dem Hülsenkörper 6 ist eine Stangenaufnahme 10 vorgesehen, in welcher die Stange 4 der Kopfstütze aufgenommen ist. Die Stangenaufnahme 10 weist in der beispielhaften Darstellung gemäß Figur 2 einen kreisförmigen Querschnitt auf; dies ist jedoch nicht als eine einschränkende Ausgestaltung aufzufassen: Es ist gemäß alternativer Ausführungsformen möglich, dass die Stangenaufnahme 10 einen ovalen bzw. nichtkreisförmigen Querschnitt aufweist. Die Stange 4 kann durch ein Verriegelungselement der Führungshülse 5 in mehreren vorgegebenen Stellungen verriegelt werden, wobei die Stange 4 mehr oder weniger weit aus der Stangenaufnahme 10 hervorsteht. Zur Höhenverstellung der Kopfstütze 3 kann die Stange zwischen diesen vorgegebenen Stellungen bewegt werden. Der Hülsenkörper 6 der Führungshülse 5 ist aus einem Kunststoff mit hoher Schlagzähigkeit ausgebildet, wodurch die Robustheit der Führungshülse gegenüber unfallbedingter Stoßeinwirkung erhöht wird. Beispielsweise kann der Hülsenkörper aus, insbesondere schlagzäh modifiziertem, Polyoxymethylen (POM) ausgebildet sein.

Die Führungshülse 5 weist darüber hinaus einen elastischen Bereich 7 auf, welcher einstückig an dem Hülsenkörper 6 vorgesehen ist. Der elastische Bereich 7 ist in Richtung der Stangenaufnahme 10 vorgespannt um die Stange in der Stangenaufnahme festzulegen und insbesondere Klappergeräusche zu vermeiden. An der Außenkontur des Hülsenkörpers 6 ist ferner ein Federelement 8 angeordnet, über welches der elastischen Bereich 7 mit einer Federkraft beaufschlagt wird. Das Federelement 8 ist nach Art einer Klammer ausgebildet, die Hülsenkörper 6 teilweise umgreift. Ferner weist das Federelement 8 einen Kontaktbereich 9 auf, der an dem elastischen Bereich 7 anliegt. Der Kontaktbereich 9 des Federelements 8 erstreckt sich insbesondere über die gesamte Breite des Federelements 8, d.h. über die gesamte Ausdehnung des Federelements 8 in axialer Richtung des Hülsenkörpers 6. Durch das Federelement 8 kann eine Abnahme der Vorspannung des elastischen Bereichs 7 kompensiert werden, so dass Klappergeräusche wirksam vermieden werden.

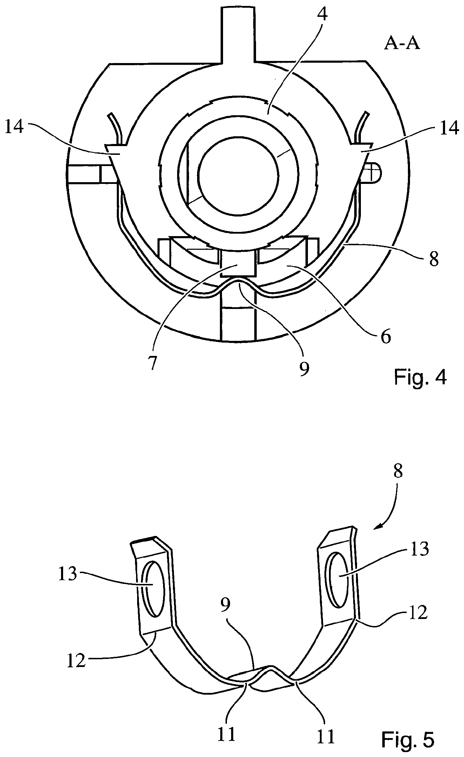

In der in **Fig. 3** **und** **4** gezeigten Stellung liegt die Stange 4 der Kopfstütze 3 unmittelbar an dem elastischen Bereich 7 an. Hierdurch wird die Stange 4 innerhalb der Stangenaufnahme 10 festgelegt und unerwünschte Klappergeräusche, welche durch geringfügige Bewegungen der Stange 4 in der Führungshülse 5 entstehen können, werden verringert. Die Vorspannung des elastischen Bereichs 7 kann mit der Zeit abnehmen. Durch das von außen an dem elastischen Bereich 7 anliegende Federelement 8 kann eine derartige Abnahme der Vorspannung kompensiert werden.

Wie der Darstellung in **Fig. 5** entnommen werden kann, ist das Federelement 8 aus einem bandförmigen Grundkörper gebildet, und weist zwei erste, sich über die gesamte Breite des Grundkörpers erstreckende Biegestellen 11 auf, zwischen denen der Kontaktbereich 9 als Ausstülpung ausgebildet ist. Die ersten Biegestellen 11 verlaufen bezogen auf den Hülsenkörper 6 in axialer Richtung, d.h. parallel zur Längsachse L. Wie in der Fig. 5 dargestellt weist das Federelement 8 in einen W-förmigen Querschnitt auf.

Zudem sind an dem Grundkörper des Federelements 8 zwei zweite Biegestellen 12 vorgesehen, über welche die beiden Endbereiche des Grundkörpers in Richtung des Hülsenkörpers 6 gebogen sind. Durch das Biegen der Endbereichs kann eine Vorspannung des Federelements 8 derart ermöglicht werden, dass das Federelement 8 an zwei gegenüberliegenden Seiten des Hülsenkörpers 6 anliegt.

Ferner weist das Federelement 8 zwei Befestigungsausnehmungen 13 auf, über welche das Federelement 8 an dem Hülsenkörper 6 festlegbar ist. Die Befestigungsausnehmungen 13 sind bevorzugt in den Endbereichen des bandförmigen Grundkörpers des Federelements 8 angeordnet. Die Befestigungsausnehmungen 13 sind an Befestigungspunkten 14 des Hülsenkörpers festgelegt, die in Umfangsrichtung des Hülsenkörpers 6 voneinander beabstandet sind. Die Befestigungspunkte 14 des Hülsenkörpers 6 sind diametral gegenüberliegend an dem Hülsenkörper 6 angeordnet.

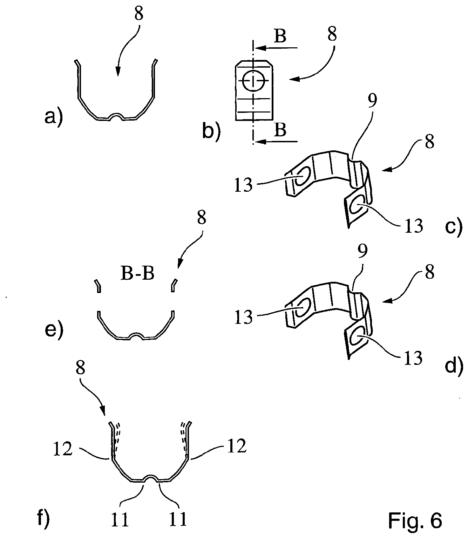

In **Fig. 6a****-f** sind verschiedene Ansichten und Schnittdarstellungen des Federelements 8 gezeigt. Im Rahmen der Herstellung des Federelements 8 wird der bandförmige Grundkörper zunächst mit den beiden Befestigungsausnehmungen 13 und den ersten Biegestellen 11 sowie den zweiten Biegestellen 12 versehen, so dass sich eine Federelement 8 ergibt, wie es in Fig. 6c bzw. mit durchgezogenen Linien in Fig.6f dargestellt ist. Dann werden die Endstücke des Grundkörpers auf einander zu gebogen, so dass das Federelement die in Fig. 6d und Fig. 6f gestrichelt gezeigte Form annimmt, in welcher das Federelement 8 eine Vorspannung aufweist, durch welche die Endstücke des Federelements an zwei gegenüberliegenden Seiten des Hülsenkörpers 6 anliegen können.

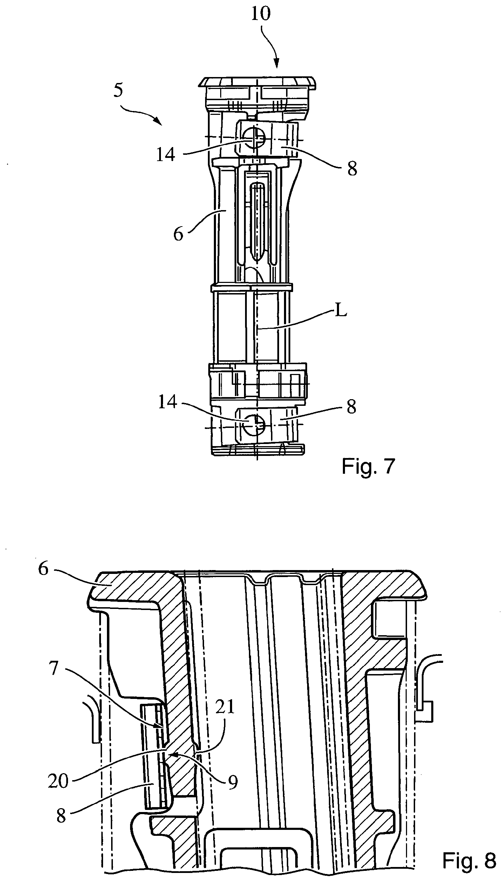

Die Darstellung in **Fig. 7** zeigt eine Führungshülse 5 gemäß einer alternativen Ausgestaltung. Die Führungshülse 5 weist einen einstückig ausgebildeten Hülsenkörper 6 auf, der sich entlang einer Längsachse L erstreckt. In dem Hülsenkörper 6 ist eine Stangenaufnahme 10 vorgesehen, in welcher die Stange der Kopfstütze aufgenommen ist. Im Unterschied zu der in Fig. 2 gezeigten zylindrischen Stangenaufnahme 10, in welche eine gerade Stange 4 einführbar ist, ist die Stangenaufnahme 10 gemäß Fig. 7 gebogen ausgebildet. Insofern kann in der Stangenaufnahme gemäß Fig. 7 eine gebogene Stange aufgenommen werden. Die Stangenaufnahme 10 weist eine Krümmung gegenüber der Längsachse L des Hülsenkörpers 6 auf, welche an die Krümmung der Stange angepasst ist. Zur Höhenverstellung der Kopfstütze kann die Stange zwischen vorgegebenen Stellungen bewegt werden. Der Hülsenkörper 6 der Führungshülse 5 ist aus einem Kunststoff mit hoher Schlagzähigkeit ausgebildet, wodurch die Robustheit der Führungshülse gegenüber unfallbedingter Stoßeinwirkung erhöht wird. Beispielsweise kann der Hülsenkörper aus, insbesondere schlagzäh modifiziertem, Polyoxymethylen (POM) ausgebildet sein.

Die Führungshülse 5 weist darüber hinaus zwei elastische Bereiche (in Fig. 5 durch die Federelemente 8 verdeckt) auf, welche jeweils einstückig an dem Hülsenkörper 6 vorgesehen ist. Die elastischen Bereiche sind in Richtung der Stangenaufnahme 10 kraftbeaufschlagt um die Stange in der Stangenaufnahme 10 festzulegen und insbesondere Klappergeräusche zu vermeiden. An der Außenkontur des Hülsenkörpers 6 ist ein Federelement 8 angeordnet, über welches der elastischen Bereich 7 mit einer Federkraft beaufschlagt wird. Das Federelement 8 entspricht dem in Fig. 6 gezeigten Federelement 8. Da Federelement 8 ist nach Art einer Klammer ausgebildet, die Hülsenkörper 6 nur teilweise umgreift. Das bedeutet, dass sich das Federelement nicht vollständig in Umfangsrichtung um den Hülsenkörper 6 erstreckt. Das Federelement 8 weist in axialer Richtung des Hülsenkörpers 6 eine Breite auf. Es ist aus einem bandförmigen Grundkörper gebildet, wobei der Kontaktbereich 9 als eine Ausstülpung zwischen zwei ersten, sich über die gesamte Breite des Grundkörpers erstreckenden Biegestellen ausgebildet ist.

Wie der Schnittdarstellung in **Fig. 8** entnommen werden kann, weist das Federelement 8 einen Kontaktbereich 9 auf, der an dem elastischen Bereich 7 anliegt. Der Kontaktbereich 9 des Federelements 8 erstreckt sich nicht über die gesamte Breite des Federelements 8, d.h. über die gesamte Ausdehnung des Federelements 8 in axialer Richtung des Hülsenkörpers 6. Der Kontaktbereich 9 des Federelements 8 steht ausschließlich in Kontakt mit einem nach außen vorstehenden Element 20 des elastischen Bereichs 7. Das nach außen vorstehende Element 20 ist nach Art einer Erhebung ausgebildet, welche in axialer Richtung des Hülsenkörpers eine Erstreckung aufweist, die kleiner ist als die Breite des Federelements 8 in axialer Richtung. Das nach außen vorstehende Element 20 ist somit an der Seite des elastischen Bereichs 7 angeordnet, welcher von der Stangenaufnahme 10 abgewandt ist.

Ferner weist der elastische Bereich 7 an der Seite des elastischen Bereichs 7, welche der Stangenaufnahme 10 zugewandt ist, ein nach innen vorstehendes Element 21 auf. Das nach innen vorstehende Element 21 ist nach Art einer Erhebung ausgebildet, welche in axialer Richtung des Hülsenkörpers eine Erstreckung aufweist, die kleiner ist als die Breite des Federelements 8 in axialer Richtung. Durch die Federkraft wird das nach innen vorstehende Element 21 gegen die in der Stangenaufnahme 10 aufgenommene Stange gedrückt. Das nach innen vorstehende Element 21 ist in axialer Richtung des Hülsenkörpers 6 auf derselben Höhe angeordnet wie das nach außen vorstehende Element 20.

Die Darstellung in Fig. 8 zeigt ferner, dass das nach innen vorstehende Element 21 eine asymmetrische Krümmung aufweist. Die Krümmung des nach innen vorstehenden Elements 21 ist auf einer ersten Seite, welcher einer Öffnung der Stangenaufnahme 10 näher liegt, steiler als auf eine zweiten Seite, welcher weiter entfernt von der Öffnung der Stangenaufnahme 10 näher angeordnet ist. Diese Form wird dadurch erreicht, dass die Herstellung des Hülsenkörpers 8 mittels Spritzgießen erfolgt. Beim Spritzgießen ist innerhalb der Stangenaufnahme 8 ein Kern angeordnet, welcher eine Ausnehmung oder Kerbe an der Stelle aufweist, an der das nach innen vorstehende Element 21 gebildet werden soll. Beim Entfernen des Kerns durch die Öffnung der Stangenaufnahme 10 nach Art einer Zwangsentfernung wird die Seite des nach innen vorstehenden Elements 21, welche der Öffnung abgewandt ist derart verformt, dass ihre Krümmung verringert wird.

Durch das Federelement 8 kann eine Abnahme der Vorspannung des elastischen Bereichs 7 kompensiert werden, so dass Klappergeräusche wirksam vermieden werden. Ferner können Fertigungstoleranzen kompensiert werden, ohne größere Einflußnahme auf die Verstellfreiheit und die Klapperfreiheit der Kopfstütze.

Die vorstehend beschriebenen Führungshülsen zur Aufnahme einer Stange 4 einer Kopfstütze 3 umfassen jeweils einen Hülsenkörper 6, der eine Stangenaufnahme 10 zur Aufnahme der Stange 4 und einen elastischen Bereich 7 aufweist, welcher in Richtung der Stangenaufnahme 10 kraftbeaufschlagt ist um die Stange 4 in der Stangenaufnahme 10 festzulegen. Ferner umfasst die Führungshülse ein an der Außenkontur des Hülsenkörpers 6 angeordnetes Federelement 8 zur Beaufschlagung des elastischen Bereichs 7 mit einer Federkraft, welches einen an dem elastischen Bereich 7 anliegenden Kontaktbereich 9 aufweist, wobei das Federelement 8 als eine den Hülsenkörper 6 teilweise umgreifende Klammer ausgebildet ist, die in axialer Richtung des Hülsenkörpers 6 eine Breite aufweist, wobei das Federelement 8 aus einem bandförmigen Grundkörper gebildet ist, wobei der Kontaktbereich 9 als eine Ausstülpung zwischen zwei ersten, sich über die gesamte Breite des Grundkörpers erstreckenden Biegestellen 11 ausgebildet ist.

### Bezugszeichenliste

- 1: Fahrzeugsitz
- 2: Rückenlehne
- 3: Kopfstütze
- 4: Stange
- 5: Führungshülse
- 6: Hülsenkörper
- 7: elastischer Bereich
- 8: Federelement
- 9: Kontaktbereich
- 10: Stangenaufnahme
- 11: Biegestelle
- 12: Biegestelle
- 13: Befestigungsausnahme
- 14: Befestigungspunkt
- 20: nach außen vorstehendes Element
- 21: nach innen vorstehendes Element
- L: Längsachse

## Patentansprüche

1. Führungshülse zur Aufnahme einer Stange (4) einer Kopfstütze (3) mit einem Hülsenkörper (6), der eine Stangenaufnahme (10) zur Aufnahme der Stange (4) und einen elastischen Bereich (7) aufweist, welcher in Richtung der Stangenaufnahme (10) kraftbeaufschlagt ist um die Stange (4) in der Stangenaufnahme (10) festzulegen, und mit einem an der Außenkontur des Hülsenkörpers (6) angeordneten Federelement (8) zur Beaufschlagung des elastischen Bereichs (7) mit einer Federkraft, welches einen an dem elastischen Bereich (7) anliegenden Kontaktbereich (9) aufweist, wobei das Federelement (8) als eine den Hülsenkörper (6) teilweise umgreifende Klammer ausgebildet ist, die in axialer Richtung des Hülsenkörpers (6) eine Breite aufweist, wobei das Federelement (8) aus einem bandförmigen Grundkörper gebildet ist, wobei der Kontaktbereich (9) als eine Ausstülpung zwischen zwei ersten, sich über die gesamte Breite des Grundkörpers erstreckenden Biegestellen (11) ausgebildet ist, **dadurch gekennzeichnet, dass** das Federelement (8) zwei Befestigungsausnehmungen (13) aufweist, über welche das Federelement (8) an dem Hülsenkörper (6) festlegbar ist.

2. Führungshülse nach Anspruch 1, wobei sich die Klammer in Umfangsrichtung des Hülsenkörpers (6) in einem Bereich von 40% bis 60%, besonders bevorzugt von 45% bis 55%, des Umfangs des Hülsenkörpers (6) erstreckt.

3. Führungshülse nach einem der vorhergehenden Ansprüche, wobei die Ausstülpung als ein in Richtung des Hülsenkörpers (6) gebogener Bereich des Federelements (8) ausgestaltet ist.

4. Führungshülse nach einem der vorhergehenden Ansprüche, wobei das Federelement (8) in einen W-förmigen Querschnitt aufweist.

5. Führungshülse nach einem der vorhergehenden Ansprüche, wobei das Federelement (8) aus einem bandförmigen Grundkörper gebildet ist, und zwei zweite Biegestellen (12) aufweist, über welche die beiden Endbereiche des Grundkörpers in Richtung des Hülsenkörpers (6) gebogen sind.

6. Führungshülse nach einem der vorhergehenden Ansprüche, wobei die Befestigungsausnehmungen (13) an Befestigungspunkten (14) des Hülsenkörpers (6) festgelegt sind, die in Umfangsrichtung des Hülsenkörpers (6) voneinander beabstandet sind.

7. Führungshülse nach einem der vorhergehenden Ansprüche, wobei das Federelement (8) bevorzugt aus einem Metall, beispielsweise Federstahl, ausgebildet ist.

8. Führungshülse nach einem der vorhergehenden Ansprüche, wobei der Hülsenkörper (6) aus einem Polyamid oder aus Polyoxymethylen (POM) ausgebildet ist.

9. Führungshülse nach einem der vorhergehenden Ansprüche, wobei die Führungshülse (5) ein Verriegelungselement zur Verriegelung der Stange (4) gegenüber der Führungshülse (5) in einer vorgegebenen Verriegelungsstellung aufweist.

10. Führungshülse nach einem der vorhergehenden Ansprüche, wobei der elastische Bereich (7) ein nach außen vorstehendes Element (20) aufweist.

11. Führungshülse nach einem der vorhergehenden Ansprüche, wobei der elastische Bereich (7) an der Seite des elastischen Bereichs (7), welche der Stangenaufnahme (10) zugewandt ist, ein nach innen vorstehendes Element (21) aufweist, insbesondere wobei das das nach innen vorstehende Element (21) in axialer Richtung des Hülsenkörpers (6) auf derselben Höhe angeordnet ist wie das nach außen vorstehende Element (20).

12. Fahrzeugsitz für ein Kraftfahrzeug mit einer Rückenlehne (2) und mit einer Kopfstütze (3), wobei zur Befestigung der Kopfstütze (3) an der Rückenlehne (2) eine Führungshülse (5) nach einem der vorhergehenden Ansprüche an der Rückenlehne (2) angeordnet ist.

## Claims

1. Guide sleeve for receiving a rod (4) of a headrest (3), comprising a sleeve body (6) which has a rod receptacle (10) for receiving the rod (4) and an elastic region (7) which is force-loaded in the direction of the rod receptacle (10) in order to fix the rod (4) in the rod receptacle (10), and comprising a spring element (8) arranged on the outer contour of the sleeve body (6) for loading the elastic region (7) with a spring force, said spring element having a contact region (9) lying against the elastic region (7), wherein the spring element (8) is designed as a clip which partially embraces the sleeve body (6) and has a width in the axial direction of the sleeve body (6), wherein the spring element (8) is formed from a strip-type main body, wherein the contact region (9) is designed as a protuberance between two first bending points (11) extending across the entire width of the main body, **characterized in that** the spring element (8) has two fastening recesses (13) via which the spring element (8) is fixable to the sleeve body (6).

2. Guide sleeve according to Claim 1, wherein the clip extends in the circumferential direction of the sleeve body (6) within a range of 40% to 60%, particularly preferably 45% to 55%, of the circumference of the sleeve body (6).

3. Guide sleeve according to either of the preceding claims, wherein the protuberance is configured as a region of the spring element (8) that is bent in the direction of the sleeve body (6).

4. Guide sleeve according to any of the preceding claims, wherein the spring element (8) has a W-shaped cross section.

5. Guide sleeve according to any of the preceding claims, wherein the spring element (8) is formed from a strip-type main body and has a two second bending points (12) via which the two end regions of the main body are bent in the direction of the sleeve body (6).

6. Guide sleeve according to any of the preceding claims, wherein the fastening recesses (13) are fixed to fastening points (14) of the sleeve body (6) that are spaced apart from one another in the circumferential direction of the sleeve body (6).

7. Guide sleeve according to any of the preceding claims, wherein the spring element (8) is preferably formed from a metal, for example spring steel.

8. Guide sleeve according to any of the preceding claims, wherein the sleeve body (6) is formed from a polyamide or from polyoxymethylene (POM).

9. Guide sleeve according to one of the preceding claims, wherein the guide sleeve (5) has a locking element for locking the rod (4) in a predetermined locking position in relation to the guide sleeve (5) .

10. Guide sleeve according to one of the preceding claims, wherein the elastic region (7) has an outwardly protruding element (20).

11. Guide sleeve according to one of the preceding claims, wherein the elastic region (7) has an inwardly protruding element (21) on that side of the elastic region (7) which faces the rod receptacle (10), in particular wherein the inwardly protruding element (21) is arranged in the axial direction of the sleeve body (6) at the same height as the outwardly protruding element (20) .

12. Vehicle seat for a motor vehicle with a backrest (2) and with a headrest (3), wherein a guide sleeve (5) according to any of the preceding claims is arranged on the backrest (2) in order to fasten the headrest (3) to the backrest (2).

## Revendications

1. Douille de guidage destinée à recevoir une tige (4) d'un appuie-tête (3), avec un corps de douille (6), qui présente un logement de tige (10) destiné à recevoir la tige (4) et une région élastique (7), qui est soumise à une force en direction du logement de tige (10) afin d'immobiliser la tige (4) dans le logement de tige (10), et avec un élément de ressort (8) disposé sur le contour extérieur du corps de douille (6) pour soumettre la région élastique (7) à une force de ressort, et qui présente une région de contact (9) appliquée sur la région élastique (7), dans laquelle l'élément de ressort (8) est réalisé sous la forme d'une attache entourant partiellement le corps de douille (6) et présentant une largeur dans la direction axiale du corps de douille (6), dans laquelle l'élément de ressort (8) est formé à partir d'un corps de base en forme de bande, dans laquelle la région de contact (9) est réalisée sous la forme d'un renflement entre deux premiers points de flexion (11) s'étendant sur toute la largeur du corps de base, **caractérisée en ce que** l'élément de ressort (8) présente deux évidements de fixation (13), par lesquels l'élément de ressort (8) peut être immobilisé sur le corps de douille (6).

2. Douille de guidage selon la revendication 1, dans laquelle l'attache s'étend dans la direction périphérique du corps de douille (6) dans une plage de 40 % à 60 %, en particulier de préférence de 45 % à 55 %, de la périphérie du corps de douille (6).

3. Douille de guidage selon l'une quelconque des revendications précédentes, dans laquelle le renflement est réalisé sous la forme d'une région de l'élément de ressort (8) courbée en direction du corps de base (6).

4. Douille de guidage selon l'une quelconque des revendications précédentes, dans laquelle l'élément de ressort (8) présente une section transversale en forme de W.

5. Douille de guidage selon l'une quelconque des revendications précédentes, dans laquelle l'élément de ressort (8) est formé à partir d'un corps de base en forme de bande, et présente deux seconds points de flexion (12), par lesquels les deux régions d'extrémité du corps de base sont courbées en direction du corps de douille (6).

6. Douille de guidage selon l'une quelconque des revendications précédentes, dans laquelle les évidements de fixation (13) sont fixés en des points de fixation (14) du corps de douille (6), qui sont espacés l'un de l'autre dans la direction périphérique du corps de douille (6).

7. Douille de guidage selon l'une quelconque des revendications précédentes, dans laquelle l'élément de ressort (8) est réalisé de préférence en un métal, par exemple en acier à ressort.

8. Douille de guidage selon l'une quelconque des revendications précédentes, dans laquelle le corps de douille (6) est réalisé en un polyamide ou en polyoxyméthylène (POM).

9. Douille de guidage selon l'une quelconque des revendications précédentes, dans laquelle la douille de guidage (5) présente un élément de verrouillage pour le verrouillage de la tige (4) par rapport à la douille de guidage (5) dans une position de verrouillage prédéterminée.

10. Douille de guidage selon l'une quelconque des revendications précédentes, dans laquelle la région élastique (7) présente un élément saillant vers l'extérieur (20).

11. Douille de guidage selon l'une quelconque des revendications précédentes, dans laquelle la région élastique (7) présente, sur le côté de la région élastique (7) qui est tourné vers le logement de tige (10), un élément saillant vers l'intérieur (21), en particulier dans laquelle l'élément saillant vers l'intérieur (21) est disposé, dans la direction axiale du corps de douille (6), à la même hauteur que l'élément saillant vers l'extérieur (20).

12. Siège de véhicule pour un véhicule automobile avec un dossier (2) et avec un appuie-tête (3), dans lequel une douille de guidage (5) selon l'une quelconque des revendications précédentes est disposée sur le dossier (2) pour la fixation de l'appuie-tête (3) au dossier (2) .
